Europäisches Patentamt

European Patent Office

Office européen des brevets

(11) Numéro de publication: **0 251 886**
**A1**

## (12) DEMANDE DE BREVET EUROPEEN

(21) Numéro de dépôt: 87401429.3

(22) Date de dépôt: 23.06.87

(51) Int. Cl.⁴: **B 62 D 65/00**

(30) Priorité: 27.06.86 FR 8609351

(43) Date de publication de la demande:
07.01.88 Bulletin 88/01

(84) Etats contractants désignés: **DE ES GB IT SE**

(71) Demandeur: **RENAULT AUTOMATION**
**8/10 avenue Emile Zola**
**F-92109 Boulogne-Billancourt (FR)**

(72) Inventeur: **Bailly, Roger**
**82, Route de Montlhéry**
**F-91400 Orsay (FR)**

**Faure, Guy**
**7, Rue des Peupliers**
**F-92270 Bois Colombes (FR)**

(74) Mandataire: **Réal, Jacques**
**8 & 10, avenue Emile Zola**
**F-92109 Boulogne-Billancourt (FR)**

(54) Poste de maintien en position pour lignes capacitaires de carrosseries.

(57) Poste de travail pour lignes capacitaires de carrosseries, du type intégrable à de telles lignes pour assurer le maintien en position d'une pluralité de modèles de carrosseries ; suivant l'invention, il comprend :
- deux barillets avant (20) et arrière (30) portant chacun plusieurs jeux complets d'outillages (22, 24, 26, 28),
- un dispositif de monte et baisse (40) d'une carrosserie pour déposer celle-ci sur des outillages correspondants,
- et des tables à rouleaux (11) pour transférer une carrosserie d'un poste de travail à un autre.

FIG.1

EP 0 251 886 A1

**Description**

## POSTE DE MAINTIEN EN POSITION POUR LIGNES CAPACITAIRES DE CARROSSERIES

La présente invention se rapporte aux lignes capacitaires de carrosseries, notamment de véhicules automobiles. Elle vise plus particulièrement un poste de travail différent d'un poste de mise en géométrie, pour le maintien en position de carrosseries. Il est possible d'intégrer un tel poste à la ligne capacitaire en différents endroits appropriés. Ce poste permet d'assurer le maintien d'une caisse de véhicule pendant diverses opérations, par exemple : masticage, mise en place d'éléments de carrosserie, agrafage de ceux-ci, soudage de finition, etc ..., qui peuvent être manuelles ou automatisées.

L'invention a ainsi pour objet un poste de travail pour lignes capacitaires de carrosseries, du type assurant le maintien en position d'une pluralité de modèles de carrosseries.

Suivant une particularité essentielle, ce poste comprend :
- deux barillets avant et arrière portant chacun plusieurs jeux complets d'outillages,
- un dispositif de monte et baisse d'une carrosserie pour déposer celle-ci sur des outillages correspondants,
- et des tables à rouleaux pour transférer une carrosserie d'un poste de travail à un autre.

Ainsi conçu, ce poste peut être facilement incorporé à une ligne capacitaire de carrosseries.

D'autres particularités et avantages ressortiront plus clairement à la lecture de la description qui suit, d'un mode de réalisation préféré, donné à titre d'exemple non limitatif en référence aux dessins annexés dans lesquels :
- la figure 1 représente une vue d'ensemble de dessus d'un poste de maintien en position conforme à l'invention,
- la figure 2 représente un schéma de principe en perspective d'un barillet élément constitutif de ce poste,
- les figures 3 et 4 représentent schématiquement les barillets arrière et avant respectifs de ce poste,
- les figures 5 et 6 représentent respectivement deux diagrammes de position correspondant à ces barillets arrière et avant,
- les figures 7, 8 et 9 représentent respectivement des vues de face, de droite et de dessus d'un barillet,
- la figure 10 représente une vue d'ensemble de côté du poste illustré à la figure 1,
- et la figure 11 représente une vue d'ensemble en bout de ce poste.

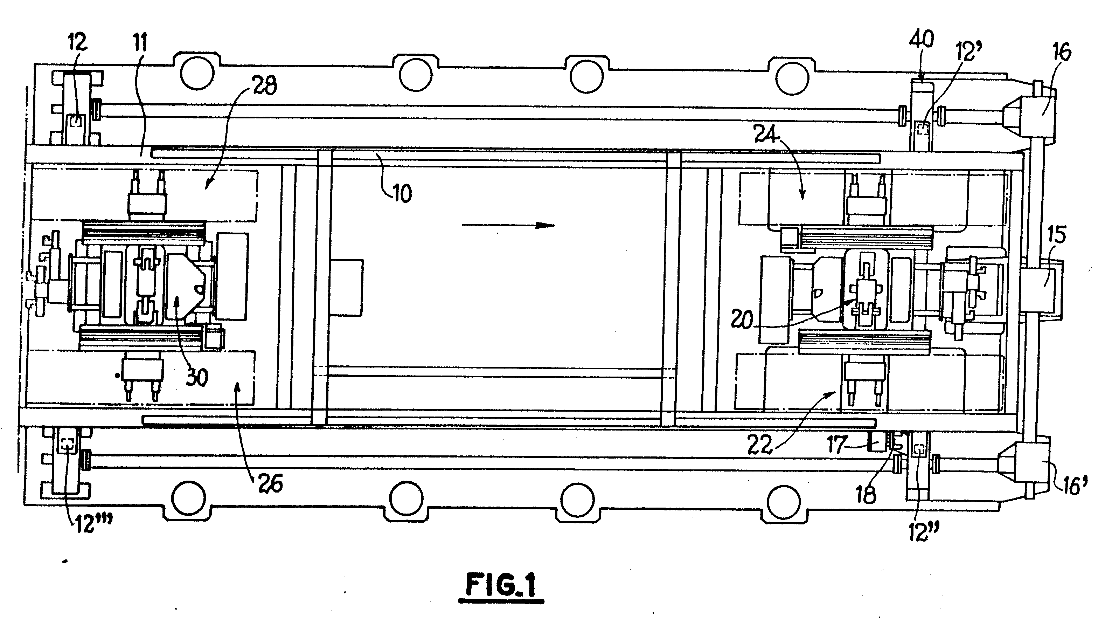

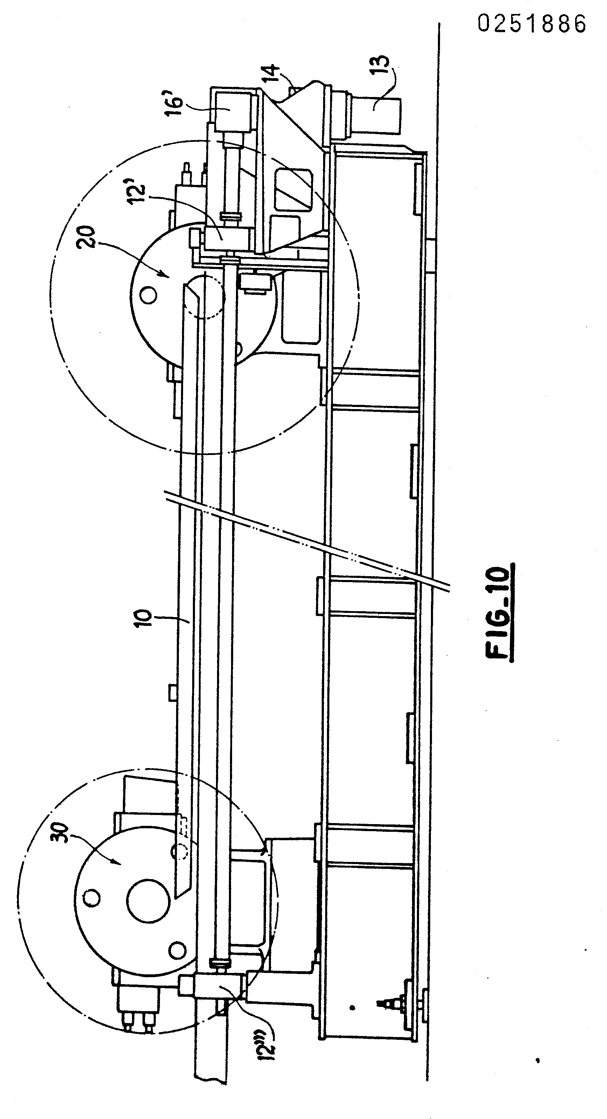

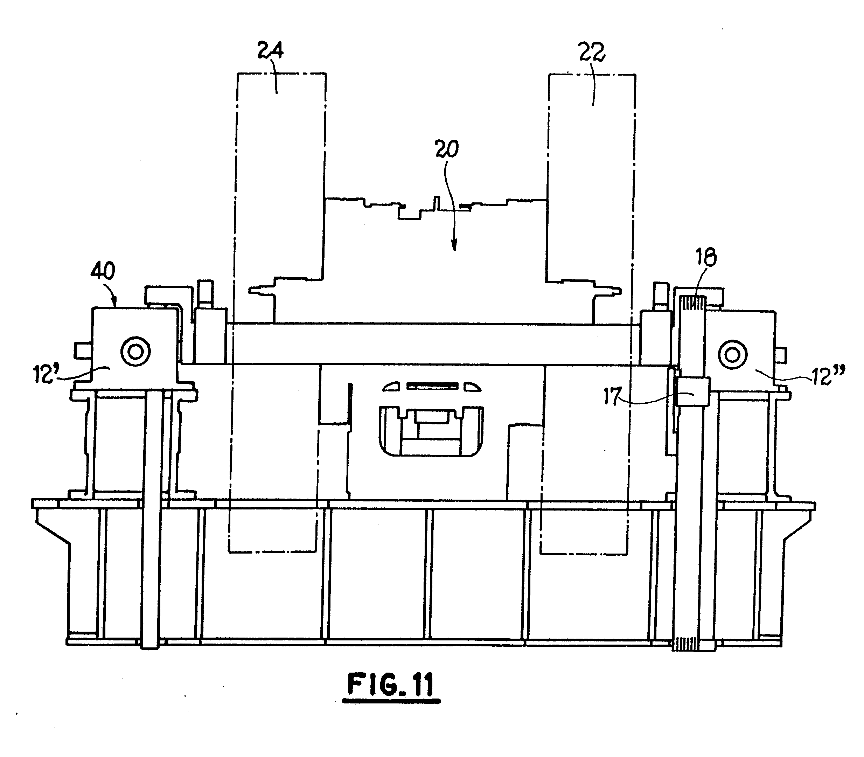

Un poste de maintien en position conforme à l'invention et illustré sur les figures 1, 10 et 11 est du type composé d'une partie standard sur laquelle viennent se placer divers outillages spécifiques au véhicule concerné.

Ce poste de travail permet de maintenir en position la caisse de ce véhicule par son soubassement ; il est conçu de manière à présenter trois outillages différents correspondant respectivement à trois types distincts de soubassement.

La figure 1 donne une vue d'ensemble de ce poste qui comprend :
- deux barillets avant 20 et arrière 30 qui portent chacun trois jeux complets d'outillages (droits 22, 26 et gauches 24, 28),
- un dispositif de monte et baisse 40 d'une carrosserie pour déposer celle-ci sur des outillages correspondants,
- des tables à rouleaux 11 pour transférer cette carrosserie d'un poste de travail à un autre.

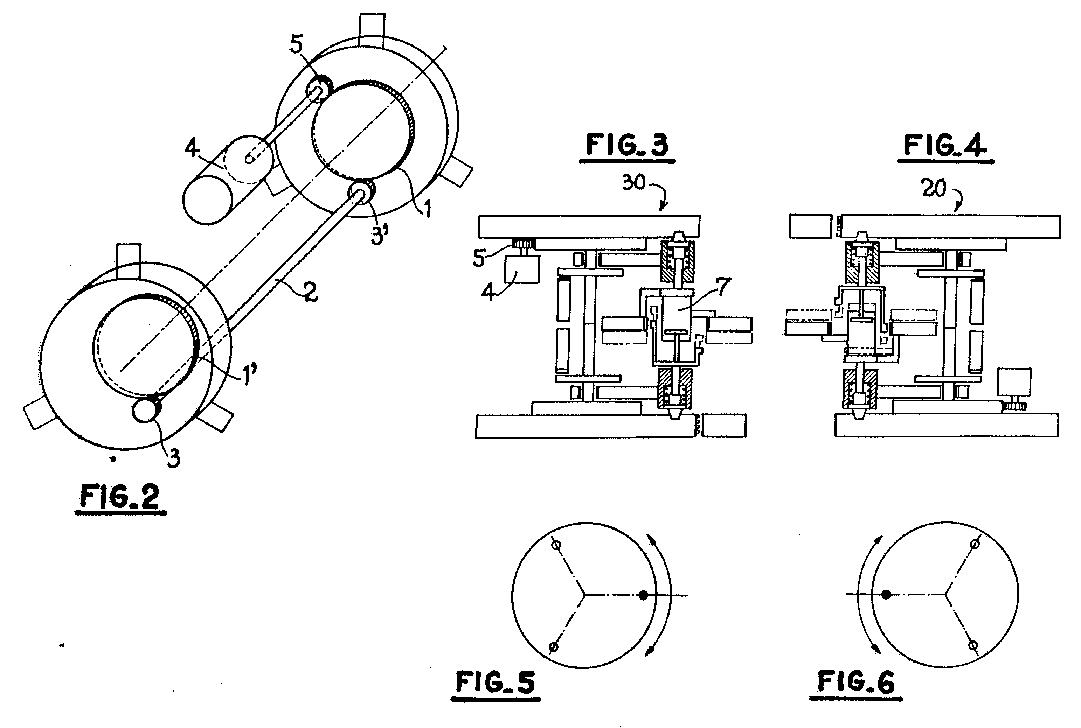

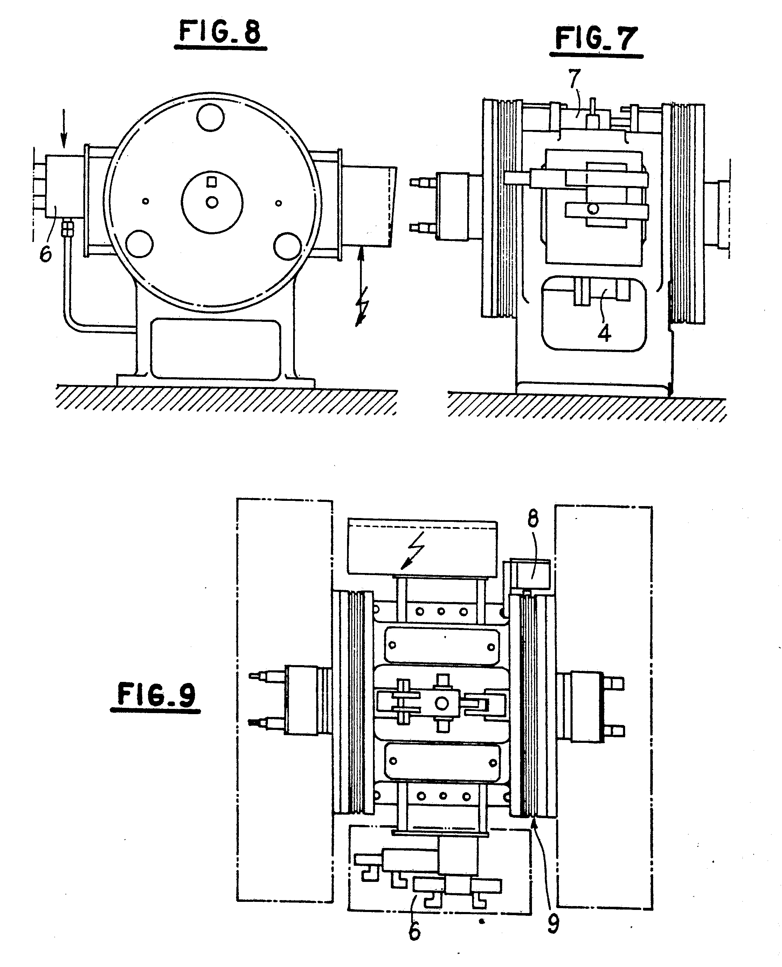

Ces barillets sont détaillés sur les figures 2 à 9.

Chaque barillet 20, 30 est conçu de la façon suivante :
Son axe de rotation est horizontal ; les amplitudes possibles sont de 120° de part et d'autre d'une position de départ.

Deux couronnes d'orientation 1 et 1' assurent les fonctions rotation et entraînement ; elles sont rendues solidaires l'une de l'autre par un arbre 2 portant à chacune de ses extrémités un pignon 3, 3'. La motorisation de l'ensemble est assurée par un moteur hydraulique 4. Sur l'arbre de celui-ci est monté un pignon 5 engrenant avec une des couronnes. Le moteur est piloté par un asservissement hydraulique 6.

Les trois positions possibles du barillet sont obtenues par l'intermédiaire d'un verrou 7 ; un ressort réalise le verrouillage et le déverrouillage est commandé pneumatiquement. Les contacts électriques contrôlant le mouvement du barillet sont données par un boîtier multicontacts 8, des cames étant placées sur un règle circulaire 9.

De plus, un contact électrique assure la sécurité quant aux amplitudes maximales dont peut disposer le barillet.

Les alimentations électriques et pneumatiques des outillages spécifiques arrivent par l'axe de rotation, des joints tournants assurent le passage de l'air alors que la qualité et la souplesse du câble électrique suffisent à encaisser l'amplitude en rotation.

Le dispositif de monte et baisse 40 d'une carrosserie est illustré sur les figures 1, 10 et 11.

Une carrosserie arrive posée sur une luge de manutention 10 ; cette luge se déplace sur des tables à rouleaux automoteurs 11.

Au poste considéré, la table à rouleaux est animée d'un mouvement de monte et baisse grâce à quatre élévateurs 12, 12', 12″, 12‴ du type pignon-crémaillère. Un moteur hydraulique 13 assure l'animation des quatre élévateurs. Sur l'arbre de sortie du moteur est placé un frein 14. Celui-ci assure le maintien en position du système monte et baisse pendant le transfert du véhicule et la phase de travail, et en cas d'arrêt d'urgence.

Des contacts électriques commandant le mouvement du dispositif de monte et baisse sont donnés par un boîtier multicontacts 17, des cames étant placées sur une règle 18 solidaire de la crémaillère d'un des élévateurs.

Le frein 14 est du type freinage par ressorts et de freinage par commande pneumatique.

L'arbre de sortie du moteur situé après le frein attaque une boîte à pignons 15 qui permet de passer d'un arbre de commande vertical à deux arbres horizontaux.

Chacun de ces arbres attaque une boîte de renvoi 16 et 16'. Les arbres de sortie de ces boîtes portent chacun deux pignons qui sont les pignons des deux élévateurs 12 et 12' (ou 12'' et 12'''). Ces pignons engrènent donc avec les crémaillères de ces élévateurs. Au sommet de ces quatre crémaillères est fixée la table à rouleaux 11 qui peut donc monter et descendre.

Cette table à rouleaux est composée de rouleaux commandés grâce à des chaînes par un moteur hydraulique asservi.

En référence aux figures 1 à 11, le poste de travail précédemment décrit fonctionne selon le cycle suivant.

Le type du véhicule est reconnu à un poste amont ; pendant le transfert de la luge 10 du poste amont à ce poste de travail, les outillages correspondant au véhicule viennent se mettre en place par rotation des barillets 20 et 30 (cf. figures 3 à 6).

Pour cela, les barillets partent en vitesse rapide puis amorcent une décélération pour continuer en vitesse lente jusqu'à la position finale. Le moteur 4 est alors débrayé et c'est le verrou 7 qui assure le rappel et le maintien du barillet dans la position exacte.

L'infrastructure du poste est conçue de manière à recevoir des moyens de mesure pour le contrôle de différents outillages.

Quand la luge arrive à sa position au poste concerné, le système de monte et baisse 40 assure la descente de l'ensemble "table à rouleaux -luge - véhicule". La descente s'effectue de la manière suivante : vitesse rapide jusqu'à une came puis vitesse lente sur une course suffisante pour que le véhicule se positionne sur ses outillages ; après, l'ensemble "table à rouleaux - luge" continue sa descente en vitesse rapide puis en vitesse lente jusqu'à une came. En position basse, des avaloirs viennent recentrer la luge sur la table à rouleaux. Puis, on freine pour assurer le maintien de l'ensemble en position basse.

Quand la phase de travail est terminée, les outillages libèrent le véhicule qui est juste posé. On défreine et l'ensemble "table à rouleaux - luge" remonte en mouvement rapide jusqu'à une came qui enclenche le mouvement lent pour prendre doucement le véhicule, et l'ensemble "table à rouleaux - luge - véhicule" repart en mouvement rapide jusqu'à une came. On freine pour maintenir cet ensemble en position haute.

Les tables à rouleaux se mettent en marche et on évacue la luge avec le véhicule. Et le cycle recommence.

## Revendications

1. Poste de travail pour lignes capacitaires de carrosseries, du type intégrable à de telles lignes pour assurer le maintien en position d'une pluralité de modèles de carrosseries, caractérisé en ce qu'il comprend :

- deux barillets avant (20) et arrière (30) portant chacun plusieurs jeux complets d'outillages (22, 24, 26, 28),

- un dispositif de monte et baisse (40) d'une carrosserie pour déposer celle-ci sur des outillages correspondants,

- et des tables à rouleaux (11) pour transférer une carrosserie d'un poste de travail à un autre.

2. Poste de travail suivant la revendication 1, caractérisé en ce que chacun des barillets (20, 30) comporte deux couronnes d'orientation (1, 1') reliées par un arbre (2) et deux pignons (3, 3'), et dont l'une (1) engrène avec un pignon (5) monté sur un arbre de sortie d'un moteur hydraulique (4).

3. Poste de travail suivant la revendication 1 ou 2, caractérisé en ce que le dispositif de monte et baisse (40) incorpore notamment quatre élévateurs (12, 12', 12'', 12''') du type pignon-crémaillère animés par un moteur hydraulique (13) sur l'arbre de sortie duquel est monté un frein (14), ainsi qu'un boîtier multicontacts (17) pour la commande de mouvement.

FIG.1

FIG.3

FIG.4

30

20

5

4

7

FIG.2

FIG.5

FIG.6

5

4

1

3'

2

1'

1

3

0251886

0251886

**FIG.8**

**FIG.7**

**FIG.9**

0251886

FIG.10

**FIG. 11**

0251886

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 211 384 (RENAULT)<br>* En entier * | 1 | B 62 D 65/00 |
| A |  | 3 | |
| | --- | | |
| Y | DE-A-3 144 686 (NISSAN)<br>* Abrégé * | 1 | |
| | --- | | |
| Y | EP-A-0 147 910 (LAMB-SCEPTRE)<br>* Abrégé; figures * | 1 | |
| | --- | | |
| Y | DE-A-1 806 205 (FORD-WERKE)<br>* Page 10, lignes 1-5; figure 6 * | 1 | |
| | ----- | | |

DOMAINES TECHNIQUES RECHERCHES (Int. Cl.4)

B 23 Q
B 62 D
B 23 P
B 23 K

Le présent rapport de recherche a été établi pour toutes les revendications

| Lieu de la recherche | Date d'achèvement de la recherche | Examinateur |
|---|---|---|
| LA HAYE | 11-09-1987 | RIS M. |